Europäisches Patentamt

European Patent Office

Office européen des brevets

(11) Veröffentlichungsnummer: **0 268 933**
**A2**

(12) **EUROPÄISCHE PATENTANMELDUNG**

(21) Anmeldenummer: **87116660.9**

(22) Anmeldetag: **11.11.87**

(51) Int. Cl.⁴: **G06F 3/023**

(30) Priorität: **26.11.86 DE 3640371**

(43) Veröffentlichungstag der Anmeldung:
**01.06.88 Patentblatt 88/22**

(84) Benannte Vertragsstaaten:
**DE FR GB NL SE**

(71) Anmelder: **Siemens Aktiengesellschaft Berlin
und München**
**Wittelsbacherplatz 2**
**D-8000 München 2(DE)**

(72) Erfinder: **Nitsche, Hans, Dr.-Ing.**
**Lassallestrasse 31**
**D-7500 Karlsruhe(DE)**

(54) **Anordnung zum Eingeben von Daten in eine Datenverarbeitungsanlage.**

(57) Auf dem Bildschirm eines Sichtgerätes (MO) ist ein einen Wert analog anzeigendes Bedienobjekt (BO1, BO2 ...) dargestellt. Nach Einstellen eines Cursors auf eine sensitive Zone des Bedienobjektes kann diese durch Verschieben des Cursors verschoben werden, wobei sich die Anzeige in gleicher Weise ändert. Die neue Anzeige wird erfaßt, und es wird, gegebenenfalls nach Umrechung, ein der neuen Anzeige entsprechender Wert abgegeben.

Die Erfindung wird bei der Prozeßautomatisierung angewandt.

EP 0 268 933 A2

## Anordnung zum Eingeben von Daten in eine Datenverarbeitungsanlage

Aus der DE-PS 21 50 389 ist eine Anordnung zum Darstellen von Blindschaltbildern bekannt, bei der mit einer Eingabetastatur die einzelnen Meß- oder Funktionsstellen (Bedienobjekte) durch Eingabe jeweils einer Adresse anwählbar sind. In den Bedienobjekten zugeordneten Speicherzellen eines Datenspeichers ist eine Stelle vorgesehen, in die nach Anwahl mittels der Eingabetastatur eine Ziffer eingetragen wird, die beim Darstellen des Speicherzelleninhaltes auf dem Bildschirm des Sichtgerätes ein Blinken des angewählten Bedienobjektes bewirkt. Außer den Tasten für die Adressenanwahl sind Funktionstasten vorgesehen, mit denen Funktionen, z. B. Ein-oder Ausschalten, für das jeweils angewählte Bedienobjekt ausgeübt werden.

In Anlagen zur Steuerung und Regelung von Prozessen, die in konventioneller Technik aufgebaut sind, werden vom Bedienungspersonal Werte kontinuierlich oder quasikontinuierlich durch Drehen eines Drehknopfes, eines Handrades usw. oder durch Schieben, z. B. eines Schiebepotentiometers, eingegeben. Auf solchen Bewegungen beruhende Eingaben von Werten haben sich bestens bewährt, da sie ergonomisch günstiger als die Eingabe mittels Tasten sind. Mit der Einführung von Bildschirmen wurden Drehknopf und Schieber durch Tasten ersetzt. Damit ergab sich der Nachteil, daß der unmittelbare Zusammenhang zwischen Bewegung und Reaktion in der Anzeige verloren ging.

In der älteren Anmeldung P 36 24 025.7 ist daher vorgeschlagen, zum Eingeben von Werten über einen Bildschirm ein Stellmittel, z. B. einen Drehpulsgeber, vorzusehen, mit dem für jeweils eines von mehreren auf den Bildschirm des Sichtgerätes dargestellten Bedienobjekten Werte erzeugt werden können. Die Zuordnung zwischen dem Stellmittel und dem Bedienobjekt wird mittels einer üblichen Anwähleinrichtung, z. B. einem Lichtgriffel, einer sogenannten Maus oder dergleichen, hergestellt. Mit einander entsprechenden Zustandsanzeigen im Stellteil und im angewählten Bedienobjektes wird die Zuordnung angezeigt. Eine solche Eingabe von Werten hat den Nachteil, daß zwei Bedienungselemente erforderlich sind, und zwar ein Stellmittel und eine Anwähleinrichtung, die gleichzeitig oder unmittelbar nacheinander betätigt werden müssen.

Der vorliegenden Erfindung liegt die Aufgabe zugrunde, eine Anordnung zu schaffen, die eine kontinuierliche Veränderung von in eine Datenverarbeitungsanlage einzugebenden Daten ermöglicht, wobei gleichzeitig die Werte der einzugebenden Daten analog angezeigt werden.

Erfindungsgemäß wird diese Aufgabe mit den im kennzeichnenden Teil des Anspruchs 1 angegebenen Maßnahmen gelöst.

Die Lage der bedienungssensitiven Zone überdeckt also nicht, wie bei der bekannten Anordnung, das gesamte Bedienobjekt, sondern nur einen kleinen Teil davon, und sie ist ferner nicht fest, sondern sie wird mit dem Cursor verschoben. Da außerdem die Anzeige des eingegebenen Wertes mit der sensitiven Zone gekoppelt ist, verändert sich mit dem Verschieben der sensitiven Zone die Anzeige. Ist das Bedienobjekt das Bild eines Schiebepotentiometers mit dessen Griff als Anzeige, so kann man diesen mit dem Cursor gewissermaßen anfassen und verschieben. Aber auch dann, wenn die Werte mit einem Zeiger, durch einen Balken oder mit einem Kreissegment angezeigt werden, können die analog angezeigten Werte in einfacher Weise verändert werden. Die Anzeige kann erfaßt und in Werte umgesetzt werden, die z. B. als Sollwerte oder andere Prozeßparameter dienen.

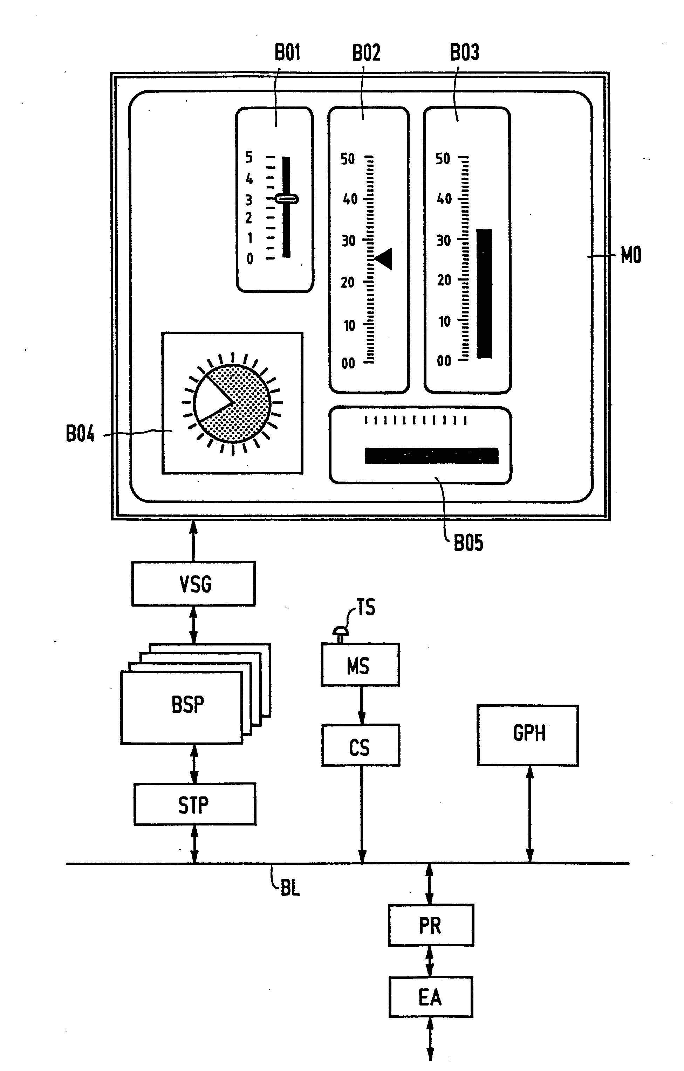

Anhand der Zeichnung, in der das Prinzipschaltbild eines Sichtgerätesystems dargestellt ist, das Bestandteil eines Automatisierungssystems sei, werden im folgenden die Erfindung sowie weitere Ausgestaltungen und Ergänzungen näher beschrieben und erläutert.

Auf dem Bildschirm eines Monitors sind Bedienobjekte BO1, BO2 ... BO5 dargestellt, die einerseits Werte anzeigen, z. B. durch die Länge eines vertikalen oder horizontalen Balkens (BO3, BO5), durch die Stellung einer Marke (BO1, BO2) oder durch die Größe eines Winkels (BO4). Die angezeigten Werte sind z. B. Prozeßparameter, wie Sollwerte, Grenzwerte, die gespeichert sind und über eine Digital-oder Analogausgabe abgegeben werden. Durch Bedienen am Bildschirm sollen die eingestellten und angezeigten Werte und damit die Prozeßparameter verändert werden können. Die dargestellten Bedienobjekte sind nur Teile eines Bildes. Auf die Wiedergabe der weiteren Bildbestandteile, die für die Erläuterung der Erfindung unwichtig sind, z. B. von Objekten, die nur ein-und ausgeschaltet werden, wie Motoren, Schalter und dergleichen, oder eines Blindschaltbildes, ist zwecks besserer Übersichtlichkeit verzichtet. Die Daten für das jeweils dargestellte Bild sind in einem Bildspeicher BSP enthalten, aus dem sie zyklisch an einen Videosignalgeber VSG ausgelesen werden, der u. a. einen Zeichengenerator, eine Farbtabelle und einen Digital-Analog-Umsetzer enthält und die Ausgangssignale des Bildspeichers BSP in für die Ansteuerung des Monitors MO geeignete Videosignale umsetzt. Die zentrale Steuereinheit des Bildschirmsystems ist ein Steuerprozessor STP, der u. a. das Auslesen der Bilddaten aus dem Bildspeicher BSP steuert. Über eine Busleitung BL steht er mit einer Cursorsteuerung CS in Verbindung, die an eine sogenannte Maus MS als Anwähleinrichtung angeschlossen ist. Durch deren Bewegung auf einer Platte kann ein Cursor über den Bildschirm verschoben und beliebig positioniert werden. Anstelle einer Maus können auch andere Anwähleinrichtungen wie Rollkugel, Steuerknüppel, Lichtgriffel und dergleichen verwendet werden.

Weiter ist an die Busleitung ein Graphikgenerator GPH angeschlossen, der die Bilddaten für die Bedienobjekte erzeugt und bei Eingabe des anzuzeigenden Wertes diesen in eine entsprechende Graphik umsetzt, z. B. in Bilddaten für die Darstellung eines Balkens mit dem Wert entsprechender Länge oder für das Positionieren der Marke an einer dem Wert entsprechenden Stelle auf einer Skala usw. Diese Bilddaten werden in den Bildspeicher eingetragen.

Jedes Bedienobjekt weist eine sensitive Zone auf, und zwar an der für die Anzeige des Wertes maßgebenden Stelle, z. B. in den Bedienobjekten BO1 und BO4 am oberen bzw. rechten Ende des Balkens, im Bedienobjekt BO2 im Bereich des Zeigers, im Bedienobjekt BO3, das einem Schiebepotentiometer entspricht, im Bereich des "Griffs", und im Bedienobjekt BO5 ist die sensitive Zone ein - schmaler Sektor am Rand des den Wert anzeigenden Sektors. Die sensitive Zone wird mit einem Code er zeugt, der in den Bildspeicherzellen gespeichert ist, welche der Lage der sensitiven Zone auf dem Bildschirm zugeordnet sind. Wird der Cursor mit Hilfe der Maus MS auf die sensitive Zone eingestellt, was vom Steuerprozessor STP festgestellt wird, und wird der Cursor parallel zur Skala des Bedienobjektes verschoben, so wird der sensitive Code im Bildspeicher in den Zellen gespeichert, die der neuen Position des Cursors zugeordnet sind. Die sensitive Zone verschiebt sich daher mit dem Cursor. Der Steuerprozessor STP überwacht dabei, daß die sensitive Zone sich nur auf einer vorgegebenen Bahn innerhalb bestimmter Endpunkte verschiebt. Die Positionen der sensitiven Zone werden fortlaufend dem Graphikgenerator GPH mitgeteilt, der die Wertanzeige, z. B. die Balkenlänge, entsprechend verändert. Diese Wertanzeige wird einem Rechner PR übergeben, der daraus einen Prozeßparameter, z. B. einen Sollwert oder Grenzwert, bildet, der über eine Ein-/Ausgabeeinheit EA als Digital-oder Analogwert abgegeben wird. Durch Betätigen einer an der Maus angebrachten Taste TS kann die beschriebene Funktion des Verschiebens der sensitiven Zone und des Veränderns des angezeigten Wertes freigegeben werden.

## Ansprüche

1. Anordnung zum Eingeben von Daten in eine Datenverarbeitungsanlage mit einem Sichtgerät (MO), auf dessen Bildschirm mindestens ein Werte analog anzeigendes Bedienobjekt (BO1, BO2 ...) dargestellt ist, das mit einer Anwähleinrichtung (MS) wählbar ist, in dem ein Cursor auf eine sensitive Zone des Bedienobjektes eingestellt wird, über das Daten eingegeben werden sollen, **gekennzeichnet durch** -die sensitive Zone ist entsprechend dem anzeigten Wert angeordnet; - nach Einstellen des Cursors auf die sensitive Zone verschiebt sich diese bei Verschieben des Cursors mit diesem, wobei sich der angezeigte Wert entsprechend verändert.

2. Anordnung nach Anspruch 1, **dadurch gekennzeichnet**, daß das Bedienobjekt (BO2) eine Skala mit einem Zeiger aufweist, der in der sensitiven Zone liegt, und daß nach Einstellen des Cursors auf den Zeiger bei Verschieben des Cursors in Skalenrichtung mit diesem die sensitive Zone und der Zeiger verschoben werden.

3. Anordnung nach Anspruch 1, **dadurch gekennzeichnet**, daß die Werte durch die Länge eines parallel zu einer Skala verlaufenden Balkens angezeigt wird, und daß die sensitive Zone am veränderlichen Ende des Balkens angeordnet ist.

4. Anordnung nach Anspruch 1, **dadurch gekennzeichnet** , daß der Wert durch den Winkel eines Kreissektors angezeigt wird und die sensitive Zone ein schmaler Sektor an einem beweglichen radialen Rand des Winkels sich befindet und daß nach Einstellen des Cursors auf den beweglichen Rand des Sektors bei Verschieben des Cursors um den Kreismittelpunkt mit diesem der Sektorwinkel verändert wird.